**Europäisches Patentamt**

**European Patent Office**

**Office européen des brevets**

(19)

(11)  **EP 1 577 971 A1**

(12)  # EUROPEAN PATENT APPLICATION
published in accordance with Art. 158(3) EPC

(43) Date of publication:
**21.09.2005 Bulletin 2005/38**

(51) Int Cl.⁷: **H01M 8/02**

(21) Application number: **04731726.8**

(86) International application number:
**PCT/JP2004/006468**

(22) Date of filing: **07.05.2004**

(87) International publication number:
**WO 2004/100296 (18.11.2004 Gazette 2004/47)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **08.05.2003 JP 2003130170**

(71) Applicant: **DAINIPPON INK AND CHEMICALS, INC.**
**Itabashi-ku, Tokyo 174-8520 (JP)**

(72) Inventors:
• **JIANG, Jianye**
  **Osaka-shi, Osaka 547-0001 (JP)**
• **HARADA, Tetsuya**
  **Sakai-shi, Osaka 590-0141 (JP)**
• **IZUTSU, Hitoshi**
  **Osaka (JP)**

(74) Representative: **Albrecht, Thomas et al**
**Kraus & Weisert**
**Patent- und Rechtsanwälte**
**Thomas-Wimmer-Ring 15**
**80539 München (DE)**

(54)  **METHOD FOR PRODUCING SEPARATOR FOR FUEL CELL, SEPARATOR FOR FUEL CELL AND FUEL CELL**

(57)  A method for manufacturing fuel cell bipolar plates involves heating and softening a nonwoven fabric including an electrically conductive powder and thermoplastic resin fibers of 0.1 to 20 μm diameter, and shaping the softened nonwoven fabric.

FIG. 3

**Description**

TECHNICAL FIELD

The present invention relates to a method for manufacturing fuel cell bipolar plates used in fuel cells such as phosphoric acid fuel cells and solid polymer fuel cells that are employed as power sources for automobiles, portable power sources, and emergency power sources. The invention relates also to fuel cells.

The present application claims priority on Japanese Patent Application No. 2003-130170, filed on May 8, 2003, the content of which is incorporated herein by reference.

BACKGROUND ART

Fuel cells, which extract as electrical power the energy obtained from an electrochemical reaction between hydrogen and oxygen, are starting to be used in a variety of applications including automobiles. These fuel cells are generally include basic structural units (unit cells) stacked in series, and the unit cells include electrolyte membranes, electrodes, and bipolar plates. This ensures that practical electrical power can be obtained (power generation).

The bipolar plates used in these fuel cells are required to have electrical conductivity to increase a power generating efficiency of the fuel cell, and gas sealing properties to prevent a leakage of fuel and oxidant gas introduced into the cell. It is thus necessary for the bipolar plates to have a small thickness variation.

Moreover, fuel cell bipolar plates are required to have a performance that includes heat resistance and chemical resistance in a working environment of the fuel cell. Recently, in automotive and related applications in particular, there exists a desire for smaller size fuel cells and an attendant need to make the bipolar plate thinner. From an economic perspective, there exists as well a need for processes which have a greater productivity (manufacturability) and are capable of low-cost production.

For example, JP-A 5-307967 discloses a manufacturing process capable of producing bipolar plates which have an excellent gas sealing ability yet are thin. In this process, sheets formed by a papermaking process and composed of precursor fibers such as acrylic fibers and pulp that convert into carbon fibers by firing are impregnated and also coated with an organic polymer substance solution in which a carbonaceous powder is suspended. A plurality of the impregnated and coated sheets are laminated, followed by subjected to a heat treatment to stabilize and a heating and firing treatment.

However, because this prior-art bipolar plate production process including a firing step, organic matter volatilizes in the firing step, sometimes creating tiny pinholes. As a result, to achieve sufficient gas sealing ability, the bipolar plate must be given a greater thickness, which lowers the electrical conductivity. Moreover, because bipolar plates are fragile and easily damaged, there are problems that it is difficult to install them on a mobile platform such as an automobile or to carry them. Also, the production of such bipolar plates requires a complicated set of operations in which the formed sheets are impregnated and coated with the organic polymer substance solution in which the carbonaceous powder is suspended, and the resulting impregnated and coated sheets are laminated, stabilized under applied heat, then heated and fired.

JP-B 64-340 and JP-A 10-334927 disclose bipolar plate manufacturing processes that eliminate such complicated operations. In these processes, the bipolar plate is obtained by molding a kneaded mixture of graphite powder and thermosetting resin.

Yet, these prior arts use a thermosetting resin and generally require several minutes of curing time, which lengthens a molding cycle and thus represents a drawback in terms of productivity.

Furthermore, thermosetting resins such as general-purpose phenolic resins are used in such prior arts. When a thermosetting resin is used, air bubbles and pores form at an interior and a surface of the bipolar plate due to product water and by-product gases created during the reaction. Therefore, the bipolar plates have defects such as warpage and swelling, in addition to which the thickness variation is large. Hence, there have problems with the use of such bipolar plates in fuel cells.

To address such problems, JP-A 2000-133281 discloses a method for manufacturing fuel cell bipolar plates from sheet-like materials prepared by binding and immobilizing electrical conductive fibers with thermoplastic resin fibers.

A fuel cell bipolar plate which is thin and has good mechanical properties can be obtained by this prior-art production process; however, to ensure the gas sealing ability of the bipolar plate, it is necessary for a content of the conductive fibers in the fuel cell bipolar plate to be no higher than 55 wt%. In bipolar plates having a low conductive fiber content such as this, the resistivity in the thickness direction, which serves as an indicator of the electrical conductivity, is about 500 $m\Omega/cm^2$.

Nor do such fuel cell bipolar plates necessarily have a high enough electrical conductivity. In recent years, fuel cell bipolar plates with a volume resistivity in the thickness direction of not more than several tens of $m\Omega\cdot cm$ are

sometimes required, so there is a need for improved electrical conductivity.

To produce a fuel cell bipolar plate having a volume resistivity in the thickness direction of not more than several tens of mΩ·cm, it is necessary for the content of electrically conductive material such as carbon material in the fuel cell bipolar plate to be set to about 70 wt% or more. However, in the bipolar plate manufacturing method disclosed in JP-A 2000-133281, in the case in which a content of the electrically conductive fiber is set to be 70 wt% or more, as noted also in this prior-art publication, the gas sealing ability which is one of the essential properties of fuel cell bipolar plates markedly lowers.

In addition to the above-described manufacturing methods, JP-A 2001-122677, for example, teaches a manufacturing method that uses thermoplastic resin and has excellent productivity, and the method involves stamping a composite sheet made of a composition that includes a thermoplastic resin and an electrically conductive material to form a fuel cell bipolar plate.

In this method, the resin composition containing the thermoplastic resin and the conductive material is kneaded under applied heat. Next, the resin composition is subjected to an application of heat and pressure to a porosity of 20% or less by a suitable process such as extrusion, calendering, or roll pressing and thus formed into a stampable sheet (composite sheet) having a thickness of 1 to 10 mm. The stampable sheet is then shaped by stamping to produce a fuel cell bipolar plate.

However, in this process, forming the sheet to a porosity of 20% or less requires that powerful shear forces and pressure be applied to the thermoplastic resin and the conductive material. Under such conditions, the conductive material is crushed, which lowers the conductivity of the resulting bipolar plate.

When the conductive material content is set at 80 wt% or more to increase the electrical conductivity, it is difficult to form the sheet by extrusion or roll pressing smoothly. Therefore, for better handleability during stamping as well as other reasons, it is necessary to form a thick sheet. Reducing the thickness of the bipolar plate has thus proven to be difficult.

Moreover, even when a sheet having a content of a conductive material of 80 wt% or more is stamped using a mold having a raised and recessed shape such as for creating gas flow channels, it is difficult to ensure stable transfer of the mold pattern. As a result, poor dimensional accuracy readily arises, and the thickness variation is larger. Bipolar plates thus obtained ultimately will not have a good volume resistivity in the thickness direction.

It is also possible to mix the thermoplastic resin powder and the electrically conductive powder, heat the mixture to at least the melting point of the thermoplastic resin, and form the mixture into a sheet without applying powerful shear forces or pressure. However, because sheets obtained in this way have a high porosity and do not easily retain the form of a sheet, it is difficult to use them as stamp-moldable sheets.

As explained above, fuel cell bipolar plates which satisfy all the performance requirements including those relating to thickness variation, electrical conductivity, gas sealing ability, and thinness and which moreover have excellent manufacturability do not yet exist.

We thought that, in order to increase the productivity of the fuel cell bipolar plate manufacturing process, it would be advantageous to use a thermoplastic resin because such a resin does not require time to allow a curing reaction to occur during molding. We therefore prefabricated a sheet-like material including a resin composition containing a thermoplastic resin and an electrically conductive material, and conducted repeated investigations on techniques for shaping this sheet-like material by known molding processes such as press molding.

However, using the above-described prior-art techniques, we were unable to overcome (ameliorate) certain problems, such as the reduced gas sealability of the bipolar plate and reduced dimensional accuracy due to variable thickness, that arise when the content of the electrically conductive material is increased in order to manufacture bipolar plates having a high electrical conductivity.

DISCLOSURE OF THE INVENTION

It is therefore an object of the invention is to provide a method for the manufacture, with little process complexity and good productivity, of a fuel cell bipolar plate which, even while having a content of an electrically conductive powder at least 70 wt%, can be made thinner than previously possible, are dimensionally accurate such as in particular a low thickness variation, and are endowed with excellent electrical conductivity and gas sealing ability. Additional objects of the invention are to provide such fuel cell bipolar plates, and fuel cells made using such fuel cell bipolar plates.

Upon examining the causes of these problems in the prior art, we found that, in techniques which, as disclosed in the above-mentioned prior-art publication JP-A 2000-133281, use a sheet-like material obtained by binding and immobilizing electrically conductive fibers with thermoplastic resin fibers, when the content of the electrically conductive fibers exceeds 55 wt%, gaps are formed between the thermoplastic resin fibers and the electrically conductive fibers. Gases pass through these gaps, resulting in lowering the gas sealing ability of the bipolar plate.

In the process disclosed in above-mentioned JP-A 2001-122677 which involves the use of a sheet formed of a resin composition containing thermoplastic resin and an electrically conductive material, a stampable sheet is produced under the application of heat and pressure such as to set the porosity at 20% or less. During the heating and pressing of this resin composition, powerful shear forces and pressure must be applied to the thermoplastic resin and the conductive material. We found that under these conditions, the conductive material such as graphite is crushed, resulting in reducing the particle size and making it impossible to achieve the desired electrical conductivity.

Also, when the above-described sheet (stampable sheet) is stamp-molded using a mold, in order to enhance the dimensional accuracy of shapes such as the gas flow channels, it is necessary to apply pressure to and compress the heated and softened sheet. However, in the case in which the resin composition contains a high concentration of the conductive material, the composition has an extremely poor flow properties. When such a resin composition is filled into the recessed and raised pattern of the mold under the application of a large pressure, it is difficult to achieve stable mold transfer. Moreover, dimensional accuracy is often poor, and the thickness variation tends to be large. We found that manufactured bipolar plates thus obtained do not have the desired degree of volume resistivity in the thickness direction, and that a high power generating efficiency cannot be achieved in fuel cells manufactured using such bipolar plates.

In the course of further investigations based on the above results, we discovered that when an electrically conductive powder that is non-fibrous rather than fibrous is used, the decrease in gas sealing ability is small even at a high content of the conductive powder.

In addition, we realized that by avoiding the application of powerful shear forces and pressure to the thermoplastic resin and the electrically conductive powder during production of the sheet-like material, sheet formation can be carried out without reducing the average particle size of the conductive powder. We also realized that even when the sheet-like material is shaped using a mold, by molding under conditions that can minimize the stress applied to the molten or softened resin composition, the dimensional accuracy of the resulting shaped article (sheet-like material) can be enhanced and the thickness variation can be reduced compared with prior-art methods in which a large pressure is applied so as to forcibly fill a resin composition having poor flow into the recessed and raised shape of the mold.

From various investigations based on these ideas, we have found a production method in which a nonwoven fabric including an electrically conductive powder and thermoplastic resin fibers is heated and softened, and the softened nonwoven fabric is molded to be effective. With this method, the electrically conductive powder can be held in gaps within the highly porous nonwoven fabric, with substantially no crushing of the powder, in a uniform manner throughout the entire nonwoven fabric.

Because this is a nonwoven fabric in which thermoplastic resin fibers are used, a high concentration of the electrically conductive powder can be uniformly held on a very small amount of thermoplastic resin fibers. Moreover, the handleability is excellent with no breakdown in the shape of the sheet even at a small thickness. Hence, this method is fully capable of meeting the recent ever-growing requirement for thinner fuel cell bipolar plates.

Furthermore, even when a nonwoven fabric containing an electrically conductive powder in a high concentration such as 70 wt% or more is formed using a mold having a finely detailed recessed and raised pattern for gas flow channels and other features, bipolar plates with a high dimensional accuracy and a very small variation in thickness can easily be obtained in a short time. The resulting bipolar plates have an excellent gas sealing ability and a very low volume resistivity in the thickness direction. Fuel cells manufactured using these bipolar plates also have an outstanding power generating efficiency. We found the above results, resulting in completing the present invention.

The present invention thus provides a method for manufacturing a fuel cell bipolar plate which involves heating and softening a nonwoven fabric including an electrically conductive powder and thermoplastic resin fibers of 0.1 to 20 μm diameter, and shaping the softened nonwoven fabric.

According to this aspect of the invention, fuel cell bipolar plates can be produced efficiently which are capable of being made unprecedentedly thin, have a small thickness variation, and have an excellent electrical conductivity and gas sealability.

This nonwoven fabric may have an content of the electrically conductive powder of 70 wt% or more. In such a case, an even better electrical conductivity is achievable.

The electrically conductive powder may have an average particle size which is at least ten times the diameter of the thermoplastic resin fibers and not more than one-third the length of the thermoplastic resin fibers. In such a case, the electrically conductive powder can be more uniformly distributed among the thermoplastic resin fibers.

The nonwoven fabric may have a porosity of 50% or more. In such a case, even when nonwoven fabric in which the electrically conductive powder has been held is hot-rolled, the conductive powder held in the nonwoven fabric is not crushed by the heated rolls. Instead, the particle size of the electrically conductive powder remains unchanged, therefore, the bipolar plate retains a high electrical conductivity.

The thermoplastic resin fibers may be polyarylene sulfide resin fibers. The polyarylene sulfide resin fibers have, in the molten state, a large affinity to the electrically conductive powder. Therefore, when the polyarylene sulfide resin fibers and the electrically conductive powder are mixed, then shaped under the application of heat to at least the melting point and pressure, the electrically conductive powder can be uniformly distributed. Bipolar plates having excellent electrical conductivity and mechanical strength can be obtained in this way.

The electrically conductive powder can may be uniformly distributed within the nonwoven fabric.

The nonwoven fabric may be shaped using a mold.

The fuel cell bipolar plate according to the invention is obtained by heating and softening a nonwoven fabric including an electrically conductive powder and thermoplastic resin fibers having a diameter of 0.1 to 20 μm, then shaping the softened nonwoven fabric.

The fuel cell bipolar plate according to this aspect of the invention is unprecedentedly thin, has a small thickness variation, and has excellent electrical conductivity and gas sealability. Moreover, it has the strength to withstand on-board use in automobiles and being carried around.

The fuel cell bipolar plate according to the invention may have a volume resistivity in the thickness direction of 30 mΩ·cm or less. By employing this fuel cell bipolar plate in a fuel cell, the internal resistance of the fuel cell can be reduced, enabling a high power generating efficiency to be obtained.

The fuel cell according to the invention has a stack construction in which a plurality of electrolyte-membrane-electrode assemblies, each of which has a pair of mutually opposed electrodes and an electrolyte membrane disposed between the electrodes. The electrolyte-membrane-electrode assemblies are stacked so that the electrolyte-membrane-electrode assemblies are each held between bipolar plates. The bipolar plates used for this purpose are the above-described fuel cell bipolar plates of the present invention.

According to this aspect of the invention, there can be obtained small fuel cells which are strong enough to endure on-board use in automobiles and being carried around, and have an excellent power generating efficiency.

BRIEF DESCRIPTION OF THE DRAWINGS

FIG. 1 is a fragmentary perspective view of a fuel cell bipolar plate according to one embodiment of the invention.

FIG. 2 is a fragmentary perspective view of a fuel cell unit construction according to one embodiment of the invention.

FIG. 3 is a fragmentary perspective view of a fuel cell stack construction according to one embodiment of the invention.

FIG. 4A shows a shape of a fuel cell bipolar plate according to one embodiment of the invention with the thickness measurement points indicated.

FIG. 4B shows a cross sectional view of the fuel cell bipolar plate according to one embodiment of the invention with the thickness measurement points indicated.

BEST MODE FOR CARRYING OUT THE INVENTION

Preferred embodiments of the invention are described below while referring to the attached diagrams. However, the invention is not limited to the embodiments described below. For example, different elements of these embodiments may be combined with each other as appropriate.

In the method for manufacturing a fuel cell bipolar plate of the present invention, a nonwoven fabric including an electrically conductive powder and thermoplastic resin fibers of 0.1 to 20 μm diameter is heated and softened, then the softened nonwoven fabric is shaped.

First, the nonwoven fabric and the method for manufacturing the nonwoven fabric are described.

The electrically conductive powder within the nonwoven fabric used in the invention is exemplified by powders of carbon materials, metals, and metal compounds. These may be used singly or as combinations of two or more thereof.

No particular limitation is imposed on the particle size of the electrically conductive powder, provided the powder can be uniformly distributed among the thermoplastic resin fibers. However, for reasons having to do with the electrical conductivity and mechanical characteristics of the bipolar plate formed, the average particle size is preferably in a range of 1 to 800 μm, and more preferably 50 to 600 μm.

It is preferable for the average particle size of the conductive powder used in the invention to be sufficiently large relative to the diameter of the thermoplastic resin fibers (described subsequently) and sufficiently small relative to the length of the thermoplastic resin fibers. This enables the conductive powder to be easily held by and uniformly distributed among the thermoplastic resin fibers.

It is even more preferable for the average particle size of the conductive powder to be at least ten times the diameter of the thermoplastic resin fibers (described subsequently) and not more than one-third the length of the thermoplastic resin fibers. This facilitates even more the uniform distribution of the conductive powder among the thermoplastic resin fibers.

The conductive powder used in the invention may be one having any type of shape that is, as noted above, non-fibrous. However, to prevent the loss of the conductive powder from the nonwoven fabric, a particle shape having an aspect ratio of 5 or less is preferred. "Aspect ratio," as used herein, refers to the ratio of a particle's size in the longitudinal direction to its size in the crosswise direction; that is, the value obtained by dividing the apparent length of the particle by its apparent width (thickness).

Examples of carbon materials that may be used as the conductive powder include synthetic graphite, natural graphite, glassy carbon, carbon black, acetylene black, and Ketjenblack. These may be used singly or as combinations of two or more thereof. Expanded graphite obtained by the chemical treatment of graphite can also be used.

From the standpoint of the electrical conductivity, preferred carbon materials include synthetic graphite, natural graphite, and expanded graphite because a bipolar plate having a high conductivity can be obtained using less carbon material.

The carbon material may have any particle shape without particular limitation, including, for example, plate-like, spherical, or irregular shapes.

Metal powders that may be used as the conductive powder include powders of metals such as aluminum, zinc, iron, copper, gold, stainless steel, palladium, and titanium. Metal compound powders that may be used as the conductive powder include powders of the borides of such metals as titanium, zirconium, and hafnium. The metal or metal compound powders may be used singly or as combinations of two or more thereof. These metal or metal compound powders may have any particle shape without particular limitation, including, for example, plate-like, spherical, or irregular shapes. Also, powders which are made of a non-conductive or semiconductive material and have been surface-treated with the above-described metal or metal compound powder can be used.

A content of the conductive powder in the nonwoven fabric can be set as appropriate for the conductivity, mechanical strength, gas sealability, and other characteristics required of the target fuel cell bipolar plate. However, the content is preferably 70 wt% or more, and more preferably 80 wt% or more. By setting the content of the conductive powder within the above range, a low-resistance fuel cell bipolar plate having a volume resistivity in the thickness direction of 30 mΩ·cm or less can be manufactured. By using this fuel cell bipolar plate, a fuel cell having a better power generating efficiency can be achieved.

Here, non-conductive powder or semiconductive powder may be used in admixture with the above-described conductive powder, insofar as the objects of the invention are attainable. Illustrative examples of the nonconductive powders that may be used include calcium carbonate, silica, kaolin, clay, mica, glass flakes, glass beads, glass powder, and hydrotalcite. Illustrate examples of the semiconductive powders that may be used include zinc oxide, tin oxide, and titanium oxide.

Next, the thermoplastic resin fibers having a diameter of 0.1 to 20μm used in the invention are described. Illustrative examples of the thermoplastic resin making up the thermoplastic resin fibers include polyarylene sulfides such as polyphenylene sulfide; fluororesins such as polytetrafluoroethylene copolymers and polyvinylidene fluoride; thermoplastic elastomers such as polyester-polyester elastomers and polyester-polyether elastomers; and resins such as polyethylene, polypropylene, cycloolefin polymers, polystyrene, syndiotactic polystyrene, polyvinyl chloride, ABS resin, polyamide resin, polyacetal, polycarbonate, polyphenylene ether, modified polyphenylene ether, polyethylene terephthalate, polytrimethylene terephthalate, polybutylene terephthalate, polycyclohexene terephthalate, polythioether sulfone, polyetheretherketone, polyether nitrile, polyarylate, polysulfone, polyethersulfone, polyetherimide, polyamide-imide, thermoplastic polyimide, liquid crystal polymers, wholly aromatic polyesters, semi-aromatic polyesters, and polylactic acid. These thermoplastic resins are selected as appropriate for durability and heat resistance at the working temperature of the fuel cell to be manufactured, and may be used singly or as a combination of two or more thereof.

The thermoplastic resin fibers are preferably fibers including a low-elastic-modulus thermoplastic resin so that the interlocking of the thermoplastic resin fibers is secure and so as to enable uniform distribution of the conductive powder. Illustrative examples of thermoplastic resins having a particularly low elastic modulus include polyolefin resins and thermoplastic elastomers.

In the case in which high-elastic-modulus thermoplastic resin fibers are to be employed, it is preferable to use fibers of a small diameter so that the fibers will readily bend. Suitable high-elastic-modulus thermoplastic resin fibers include various types of thermoplastic resin fibers having a diameter of 5 μm or less.

For example, in the production of bipolar plates for phosphoric acid fuel cells, the use of a polyphenylene sulfide resin as the thermoplastic resin is desirable from the standpoint of corrosion resistance and heat resistance.

In the production of bipolar plates for solid polymer fuel cells and bipolar plates for direct methanol fuel cells which use methanol as the fuel, the use of polyphenylene sulfide resin or polypropylene as the thermoplastic resin, and especially polyphenylene sulfide resin, is desirable from the standpoint of corrosion resistance and mechanical strength.

Polyphenylene sulfide resin in a molten state has a large affinity to conductive powder. Hence, when polyphenylene sulfide resin fibers and the conductive powder are mixed, heated to at least the melting point, and shaped under applied pressure, the conductive powder can be uniformly distributed bipolar plates having an excellent electrical conductivity and mechanical strength can be obtained in this way.

Because the thermoplastic resin fibers used in the invention are relatively slender fibers having a diameter of 0.1 to 20 µm, the thermoplastic resin fibers enable the conductive powder to be efficiently and uniformly distributed. A diameter of the thermoplastic resin fiber of 0.5 to 10 µm is preferred. This provides for good nonwoven fabric productivity and enables a high content of conductive powder to be held within the nonwoven fabric. The diameter of the thermoplastic resin fibers can be easily measured from scanning electron micrographs.

It is preferable for the thermoplastic resin fibers to have a diameter which is small compared to the conductive particles. This enables the conductive particles to be uniformly distributed within the nonwoven fabric.

In the nonwoven fabric employed in the invention, thermoplastic resin fibers having a diameter of 0.1 to 20 µm are used as an essential component; however there is no limitation on the concomitant use of thermoplastic resin fibers having a larger diameter.

The shape of the thermoplastic resin fibers is not subject to any particular limitation and may be selected as appropriate for the elastic modulus of the thermoplastic resin itself, the size of the conductive powder, and the method for manufacturing the nonwoven fabric in which the conductive powder is uniformly distributed.

A length of the thermoplastic resin fibers is preferably 0.5 mm or more. This provides for more secure interlocking of the fibers in the resulting nonwoven fabric and makes it easier to maintain the shape of the nonwoven fabric.

"Nonwoven fabric", as used in the invention, refers to a structure obtained by bonding together and interlocking the fibers by a chemical process, a mechanical process, or a combination thereof.

Also, "a nonwoven fabric including an electrically conductive powder and thermoplastic resin fibers of 0.1 to 20µm diameter", as used herein, refers to a nonwoven fabric which is formed by bonding and interlocking the fibers and in which the conductive powder is held in gaps between the fibers and the conductive powder thus held is uniformly distributed throughout the nonwoven fabric.

The conductive powder-holding nonwoven fabric used in the present invention can be manufactured using a known process for making nonwoven fabric such as a wet process or a dry process. Specific examples of production are described below.

(i) An example in which the nonwoven fabric used in the present invention is produced by a wet process is described.

The thermoplastic resin fibers and the conductive powder are mixed and dispersed in water to prepare a slurry. During the preparation of this slurry, the thermoplastic resin fibers entangle within the water to form a entangle (fiber web), and the particles of conductive powder become held within this web. A surfactant and a thickener may be suitably added at this time to stabilize the slurry.

The slurry is then cast onto a metal screen, and the fibers and powder are uniformly collected on the screen. Next, by removing water from the resulting collected material using a dewatering roller, a heating dryer and/or vacuum dehydration, a nonwoven fabric in which the particles of conductive powder are held within the entangled thermoplastic resin fibers (fiber web) can be obtained.

Here, the resulting nonwoven fabric may also be subjected to a treatment (heated and compressed) using heated rolls at a temperature above the melting point of the thermoplastic resin fibers. In this case, the powder fuses to the thermoplastic resin, enabling the powder-holding strength within the fiber web to be increased.

(ii) An example in which the nonwoven fabric used in the invention is produced by a dry process is described.

The thermoplastic resin fibers and the conductive powder are ejected, together with compressed air, from a nozzle into an air. The action of the compressed air causes the thermoplastic resin fibers to entangle. At the same time, the conductive powder become held within the entangled thermoplastic resin fibers (fiber web).

Prior to ejection from the nozzle, it is preferable for the thermoplastic resin fibers and the conductive powder to be premixed in an air stream. This enables the thermoplastic resin fibers and the conductive powder to be placed in a better (more uniformly) entangled state. This mixture of the entangled thermoplastic resin fibers and the conductive powder is collected in the form of a sheet, thus giving a nonwoven fabric which holds the conductive powder (this process is commonly referred to as "air laying").

Next, the sheet-like material is passed through pressure rolls heated to at least the melting point of the thermoplastic resin fibers, thereby the conductive powder can be securely held by the thermoplastic resin fibers.

(iii) A method in which the thermoplastic resin fibers are formed into a nonwoven fabric by a known method such as a wet or dry method, followed by the conductive powder being bonded to the nonwoven fabric is described below.

Specifically, a nonwoven fabric of the thermoplastic resin fibers is produced, and the conductive powder is incorporated into the nonwoven fabric. The conductive powder is then physically enclosed between the fibers by a needlepunching process, thereby giving a nonwoven fabric in which the conductive powder is held.

As in the above methods (i) and (ii), the resulting nonwoven fabric is passed through pressure rolls heated to at least the melting point of the thermoplastic resin fibers, thus enabling the conductive powder to be securely held by the fibers.

The above methods are examples of methods for producing the nonwoven fabric used in the invention, and the invention is not limited to these methods. Regardless of whether a wet method or a dry method is used, a nonwoven fabric which holds the conductive powder can be manufactured by introducing the conductive powder at the same time that the fiber web is formed or by embedding the conductive powder in the fiber web by a physical method such as needlepunching after the fiber web has been formed. The nonwoven fabric employed in the present invention can be obtained using any of the above methods; however the above method (ii) is preferred. This production method has an excellent nonwoven fabric productivity and does not require the use of surfactants and thickeners that are originally not needed in fuel cell bipolar plates. Moreover, the conductive powder used as the raw material is more securely held in the nonwoven fabric than when needlepunching is used.

Depending on the shape of the desired fuel cell bipolar plate, the nonwoven fabric used in the present invention can be used as a single sheet or as a plurality of stacked sheets. No particular limitation is imposed on the thickness of the nonwoven fabric.

To ensure that the bipolar plate has the desired electrical conductivity, it is preferable for the nonwoven fabric to be of a thickness such that the size of the conductive powder is not reduced in the nonwoven fabric production process; that is, a thickness of 0.05 mm to 3 mm. At a nonwoven fabric thickness of 0.05 mm to 3 mm, there is no need to apply a large pressure to the nonwoven fabric during the nonwoven fabric production, thus making it possible to keep the conductive powder from being crushed and reduced in size.

A porosity of the nonwoven fabric is preferably 50% or more. At a porosity of 50% or more, even when the nonwoven fabric is passed through heated rolls and subjected to the application of heat and pressure, the conductive powder held in the nonwoven fabric is not crushed by the rolls, allowing the particle size of the powder to remain unchanged. Therefore the bipolar plate maintains a high conductivity.

The porosity of the nonwoven fabric is more preferably 50% or more and 85% or less. This enables the bipolar plate to maintain a high conductivity, and also enables the nonwoven fabric to hold the conductive powder uniformly and in a high content.

The porosity of the nonwoven fabric can be calculated from the formula (I) below.

$$\text{Porosity (\%)} = [1 - (\text{volume of conductive powder and thermoplastic resin fibers}$$

$$\text{in nonwoven fabric})/(\text{apparent volume of nonwoven fabric})] \times 100 \qquad \text{(I)}$$

Next, a single sheet of nonwoven fabric obtained by the above-described method, or a stack of a plurality of such sheets of the nonwoven fabric, is heated and softened, then subjected to pressure in a mold and thereby molded. In this way, the desired fuel cell bipolar plate can be obtained.

Examples of methods for molding the nonwoven fabric include methods that have hitherto been used, such as press molding and stamp molding. Specific examples are described below.

(1) A nonwoven fabric, either as a single sheet or a plurality of stacked sheets, is preheated and pressurized so as to melt or soften the thermoplastic resin fibers making up the nonwoven fabric. Next, using a mold, a bipolar-plate shape having gas flow channels is imparted to at least one target side.

(2) Using a mold heated to a high temperature, the nonwoven fabric, either as a single sheet or a plurality of stacked sheets, is subjected to applied pressure and shaped while being heated so as to melt or soften the thermoplastic resin fibers making up the fabric.

In the above method (2), in order to allow the molding to be released from the mold, the mold must be cooled to a temperature at which mold release is possible, which takes time. In contrast, in the above method (1), the mold is set from room temperature to an appropriate temperature which is lower than the temperature at which the thermoplastic resin fibers soften, thereby enabling the already melted or softened thermoplastic resin fibers to cool as they are being shaped within the mold. Therefore the above method (1) is advantageous.

In prior-art methods of molding fuel cell bipolar plates using kneaded mixtures of an electrically conductive material and a thermosetting resin, in order to subjecting the thermosetting resin such as phenolic resin to a curing reaction until the molded article reaches a state in which it can be released from the mold held at a high temperature, the charge must generally be held in the mold for several minutes. This step has thus been a factor governing the degree to which the molding cycle time can be shortened.

In the present invention, using the above method (1) in particular, the mold operation takes only a short time, thereby enabling the molding cycle time to be greatly shortened and thus increasing productivity.

Fuel cells are generally constructed as a fuel cell stack assembled from a plurality of unit cells arranged in series, each unit cell being composed of an electrolyte-membrane-electrode assembly held between fuel cell bipolar plates. In such fuel cells, electricity flows in the thickness direction of the bipolar plate, and so the electrical conductivity in the thickness direction of the bipolar plate is of concern.

It is generally regarded as preferable for the fuel cell bipolar plate to have a volume resistivity in the thickness direction of 30 mΩ·cm or less. At a volume resistivity in the bipolar-plate thickness direction of 30 mΩ·cm or less, the power generating efficiency of the fuel cell rises.

The volume resistivity in the thickness direction is obtained by clamping a bipolar plate of a surface area s and a thickness t between gold-plated electrodes under a given pressure, and measuring a resistance c when power is passed through. The volume resistivity is calculated from the formula (II).

$$\text{Volume resistivity in thickness direction} = c \times s/t \qquad \text{(II)}$$

It is preferable for the thickness variation in the fuel cell bipolar plate to be as small as possible. When the thickness variation is small, when the fuel cell stack is assembled, the bipolar plates will fit more closely together and the internal resistance within the fuel cells will be small, so that the fuel cells will have a higher power generating efficiency. Conversely, when the thickness variation is large, the fuel cell will have a lower power generating efficiency.

The method for manufacturing a fuel cell bipolar plate of the present invention enables the conductive powder to be uniformly distributed to a high density within the thermoplastic resin matrix. As a result, fuel cell bipolar plates having a small thickness variation, a high conductivity, and good gas sealability can be obtained at a high production efficiency.

During production of the fuel cell bipolar plate, it is preferable for the conductive powder in the ultimately obtained fuel cell bipolar plate to be held as much as possible without any decrease in the average particle size of the powder. This enables a fuel cell bipolar plate having a high electrical conductivity to be obtained. Accordingly, it is advantageous for the conductive powder present within the ultimately obtained fuel cell bipolar plate to have an average particle size which is preferably at least 60%, more preferably at least 70%, and even more preferably at least 80%, of the average particle size prior to production of the nonwoven fabric.

In the present invention, the conductive powder used as a basic material undergoes little crushing in the production process, and the particle size can be easily be maintained.

The average particle size of the conductive powder can be measured by a laser light diffraction method.

The laser light diffraction method is one that makes use of the fact that the intensity distribution of light diffracted by particles is a function of the particle diameter. Specifically, a liquid suspension in which the powder is dispersed flows through the laser light path, light diffracted by the successively passing particles is converted by a lens into plane waves, and the intensity distribution in the radial direction is projected onto a photodetector through a rotating slit and detected.

To be able to obtain fuel cells which are both thin and small, the resulting fuel cell bipolar plates have a thickness which is preferably in a range of 0.1 to 6 mm, and especially a range of 0.1 to 3 mm.

A gas permeability of the fuel cell bipolar plates of the present invention is preferably $10^{-3}$ cm$^3$/sec·cm$^2$·atm or less.

The fuel cell bipolar plate obtained as described above can of course be used in a fuel cell composed only of the basic structural unit, that is a unit cell of a fuel cell; however it can also be used in fuel cell stacks assembled at by stacking together a plurality of these unit cells.

The fuel cell is an electrical power generating device which uses as its primary fuel hydrogen obtained by reforming a fossil fuel, and extracts as electrical power the energy generated by an electrochemical reaction between this hydrogen and oxygen. Fuel cells generally have a stack construction in which a plurality of fuel cells which carry out such power generation are stacked in series. Current collector plates are provided at both ends of the stack for collecting current.

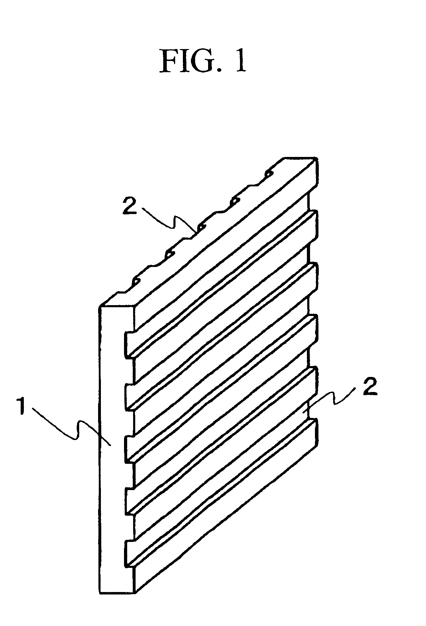

The shape of the fuel cell bipolar plate obtained in the present invention is not subject to any particular limitation. For example, as shown in FIG. 1, the fuel cell bipolar plate may have a shape with gas or liquid flow channels 2 on one or both sides thereof. The method for manufacturing the fuel cell bipolar plate of the present invention is especially preferable for manufacturing a fuel cell bipolar plate having this type of structure; that is, a ribbed shape.

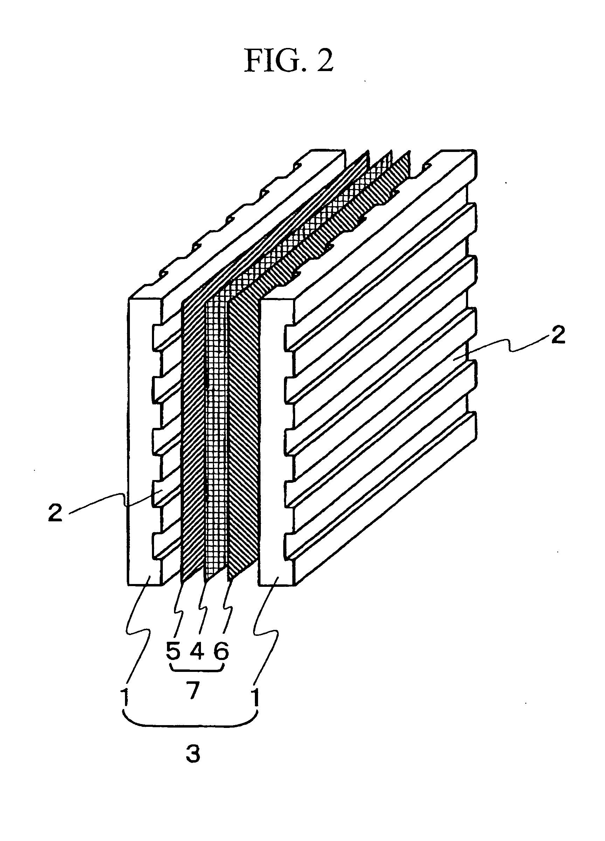

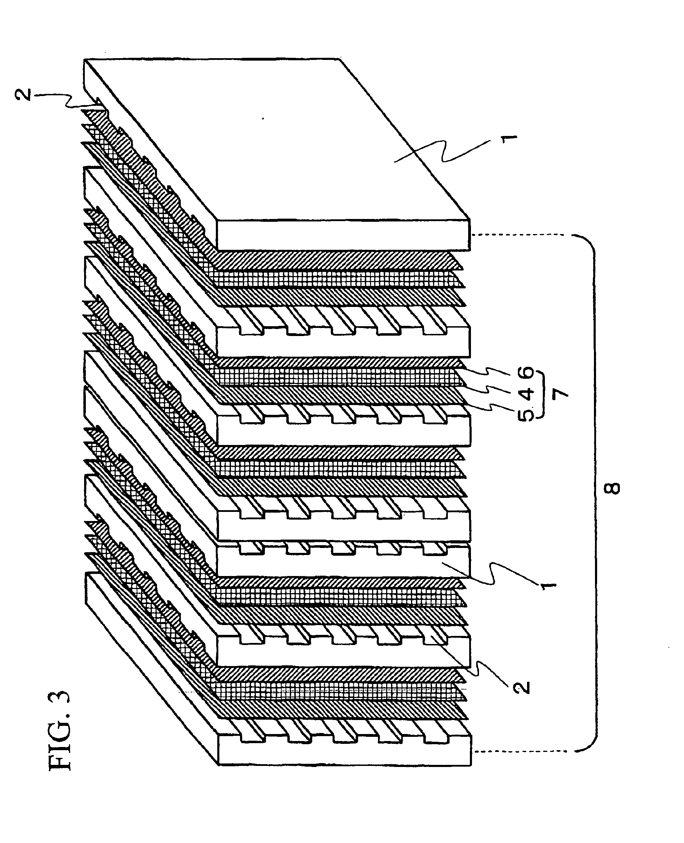

FIG. 2 shows an example of the construction of a unit cell for a solid polymer fuel cell. The unit cell 3, which is the basic structural unit of the fuel cell, has a construction in which an electrolyte-membrane-electrode assembly 7 including a solid polymer electrolyte membrane 4, a fuel electrode 5, and an oxidant electrode 6 is sandwiched on both sides between bipolar plates 1. The gas or liquid flow channels 2 formed on the surfaces of the bipolar plates are suitable for stably feeding fuel or oxidant to the electrodes. By introducing water as a coolant to the surface of the oxidant-electrode-6-side bipolar plate that faces away from the oxidant electrode 6, heat can be removed from the fuel cell. FIG 3 shows an example of a fuel cell stack in which a plurality of unit cells 3 having such a construction are stacked in series.

The fuel cell bipolar plate obtained according to the present invention can be used as bipolar plates in various types of fuel cells, including hydrazine type, direct methanol type, alkali type, solid polymer type, and phosphoric acid type.

Because the fuel cell of the present invention has a good impact resistance and can be miniaturized, in addition to use as a power supply for electrical cars, as a portable power supply, and as an emergency power supply, it can also be used as a power supply for various types of mobile platforms, such as satellites, aircraft, and space vehicles.

The present invention is illustrated more fully in the following examples and comparative examples.

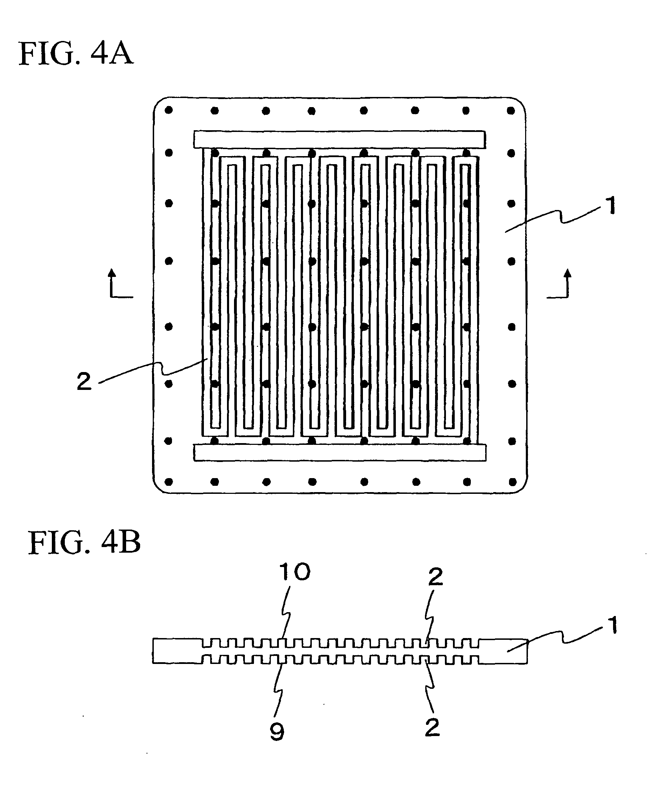

Molded pieces shaped as flat plates measuring 250x250x2 mm were used to evaluate gas sealability, to determine volume resistivity in the thickness direction, and to conduct bending tests in the examples. Measurements of thickness variation, measurements of graphite particle size before and after molding, and evaluations of the power generating characteristics of the unit cell for fuel cells were carried out using ribbed moldings measuring $250 \times 250 \times 2$ mm (FIGS. 4A and 4B).

(Evaluation of Gas Sealing ability)

Test pieces having a diameter of 60 mm and a thickness of 2 mm were cut from the flat plate-shaped moldings obtained in the examples described below, and the gas sealability of the flat plate-shaped moldings was evaluated in accordance with Test Method for Gas Permeability through Plastic Film and Sheeting of JIS K-7126. Hydrogen was used as the test gas.

(Evaluation of Volume Resistivity in Thickness Direction)

Test pieces measuring 50 mm square and having a thickness of 2 mm were cut from the flat plate-shaped moldings obtained in the examples described below, and the volume resistivity in the thickness direction of the moldings was measured by the thickness direction volume resistivity measurement method described above.

(Bending Test)

Test pieces having a width of 25 mm, a length of 70 mm and a thickness of 2 mm were cut from the flat plate-shaped moldings obtained in the examples described below, and the flexural strength of the moldings was measured according to JIS K-6911.

(Thickness Variation)

"Thickness variation," as used herein, refers to the difference between the maximum thickness and the minimum thickness in a single ribbed molding obtained in the examples described below. This value is calculated from the following formula (III).

$$\text{Thickness variation} = \text{maximum thickness} - \text{minimum thickness} \qquad \text{(III)}$$

Measurements were carried out at 64 places in the length direction selected by a given method as shown in FIG 4A (each place is indicated by a bullet •), using a linear gauge capable of being pressed against the ribbed molding at a fixed pressure. The probe shape, probe diameter, and measurement pressure for the linear gauge used were respectively as follows: cylindrical shape, 5 mm diameter, and 8 newtons (N) of pressure.

Here, "thickness" refers to the thickness, in level portions of the test piece, from the level area on one face to the level area on the other face. In the ribbed and grooved portions, referring to FIG. 4B, which is a sectional view taken at the arrows in FIG 4A, "thickness" refers to the thickness from one rib high point 9 to another rib high point 10.

(Measurement of Graphite Particle Diameter Before and After Molding)

Using graphite powder prior to molding as the sample, the average particle size was measured by the laser light diffraction method. Using test specimens prepared by firing at about 500°C the ribbed moldings obtained in the examples described below so as to remove the resin portion, the average particle size of the graphite was measured in the same way as above by the laser light diffraction method.

(Evaluation of Power Generating Characteristics of Unit Cell)

An electrolyte-membrane-electrode assembly was placed between two ribbed moldings obtained in the following examples and clamped under a pressure of 5 kg/cm$^2$ to form a unit cell for fuel cell for evaluating the power generating characteristics. Humidified hydrogen and air were supplied to this cell, and the voltage was measured at a cell temperature of 80°C and a current density of 100 mA/cm$^2$.

(Example 1)

Eighty parts by weight of synthetic graphite (irregularly shaped; average particle size of 88 μm) as the conductive powder and 20 parts by weight of polyphenylene sulfide resin staple fibers (diameter, 1 μm; length, 1 mm) as the thermoplastic resin fibers were mixed in an air mixer while fibrillating the thermoplastic resin fibers. The resulting mixture was fed to a nozzle having an orifice of circular diameter while at the same time ejecting compressed air from a compressed air inlet located just upstream of the nozzle. The mixture is made to strike a baffle located in front of the nozzle, thereby fibrillating the thermoplastic resin fibers and also causing the conductive powder to disperse. The thermoplastic resin fibers and the conductive powder are then collected, forming a conductive powder-containing fiber web. This fiber web was passed through pressure rolls heated to 300°C, which is above the resin melting temperature (280°C), and to give a nonwoven fabric of 0.25 mm thickness (porosity, 75%).
The nonwoven fabric was cut into thirty pieces of given dimensions (250×250 mm) conforming to the bipolar-plate shape, followed by the 30 pieces being stacked and heated in a furnace to 300°C, thereby melting the polyphenylene sulfide resin. The nonwoven fabric was then immediately fed in the molten state to a mold loaded into a press molding machine and heated to 150°C, where it was molded under 60 MPa of pressure, then allowed to cool and solidify. This yielded a ribbed molding with a width of 25 cm, a thickness of 2 mm, and a length of 25 cm of the shape shown in FIG 4. The molding cycle was 30 seconds. A flat plate-like molding having a width of 25 cm, a thickness of 2 mm, and a length of 25 cm was similarly molded. This molding had a hydrogen gas permeability of 3.0×10$^{-5}$ cm$^3$/sec·cm$^2$·atm, a volume resistivity of 5 mΩ·cm, and a flexural strength of 50 MPa. The power generated by a unit cell at 80°C and a current density of 100 mA/cm$^2$, when measured as described above, was 783 mV.

(Example 2)

Aside from using 70 parts by weight of synthetic graphite (irregularly shaped; average particle size, 88 μm) as the conductive powder and 30 parts by weight of polyphenylene sulfide resin staple fibers (diameter, 1 μm; length, 1 mm) as the thermoplastic resin fibers, a nonwoven fabric was obtained using the same method and conditions as in Example 1.
The nonwoven fabric was cut into thirty pieces of given dimensions (250x250 mm) conforming to the bipolar-plate shape, followed by the 30 pieces being stacked and heated in a furnace to 300°C, thereby melting the polyphenylene sulfide resin. The nonwoven fabric was then immediately fed in the molten state to a mold loaded into a press molding machine and heated to 150°C, where it was molded under 60 MPa of pressure, then allowed to cool and solidify. This yielded a ribbed molding having a width of 25 cm, a thickness of 2 mm, and a length of 25 cm of the shape shown in FIG 4. The molding cycle was 30 seconds.
A flat plate-like molding having a width of 25 cm, a thickness of 2 mm, and a length of 25 cm was similarly molded. This molding had a hydrogen gas permeability of 1.5×10$^{-6}$ cm$^3$/sec·cm$^2$·atm, a volume resistivity of 15 mΩ·cm, and a flexural strength of 56 MPa. The power generated by a unit cell at 80°C and a current density of 100 mA/cm$^2$, when measured as described above, was 720 mV.

(Example 3)

Aside from using 80 parts by weight of synthetic graphite (irregularly shaped; average particle size, 88 μm) as the conductive powder and 20 parts by weight of polyolefin resin staple fibers (diameter, 1 μm; length, 1 mm) as the thermoplastic resin fibers, a fiber web was formed using the same method and conditions as in Example 1. This fiber web was passed through pressure rolls heated to 190°C, giving a nonwoven fabric of a specific thickness (thickness, 0.25 mm; porosity, 75%).
The nonwoven fabric was cut into thirty pieces of given dimensions (250×250 mm) conforming to the bipolar-plate shape, followed by the 30 pieces being stacked together and heated in a furnace to 190°C, thereby thoroughly melting the polyolefin resin staple fibers. The nonwoven fabric was then immediately fed in the molten state to a mold heated to 100°C. Next it was molded under 60 MPa of pressure in a press molding machine, then allowed to cool and solidify. This yielded a ribbed molding having a width of 25 cm, a thickness of 2 mm, and a length of 25 cm. The molding cycle was 30 seconds. A flat plate-like molding having a width of 25 cm, a thickness of 2 mm, and a length of 25 cm was similarly molded.

These moldings had a hydrogen gas permeability of $3.0 \times 10^{-5}$ $CM^3$ /sec·cm$^2$·atm, a volume resistivity of 7 mΩ·cm, and a flexural strength of 40 MPa. The power generated by a unit cell at 80°C and a current density of 100 mA/cm$^2$ when measured as described above, was 780 mV.

(Comparative Example 1)

A mixed felt including 80 parts by weight of pitch-based carbon fibers and 20 parts by weight of polyphenylene sulfide resin fibers was passed through pressure rolls heated to 300°C to form a nonwoven fabric (thickness, 6.5 mm; porosity, 60%). Using this nonwoven fabric, the same molding operations were carried out as in Example 1, giving a ribbed molding and a flat plate-like molding.

These moldings had a hydrogen gas permeability of $5.0 \times 10^{-3}$ cm$^3$/sec·cm$^2$·atm, a volume resistivity of 60 mΩ·cm, and a flexural strength of 80 MPa.

An evaluation of the power generating characteristics of the unit cell under the conditions described in the foregoing examples, that is, 80°C and a current density of 100 mA/cm$^2$, was begun. However, gas leakage arose from the assembled unit cells, making it impossible to evaluate the power generating characteristics. Gas leakage from the unit cell for fuel cell probably occurred on account of the poor gas sealability of the ribbed moldings produced by this method.

(Comparative Example 2)

Eighty parts by weight of the same synthetic graphite as that used in Example 1 and 20 parts by weight of polyphenylene sulfide fibers were dry mixed in a mixer for 10 minutes. This mixture was roll press molded at a molding pressure of 20 MPa and 320°C, giving a stampable sheet having a thickness of 4 mm (porosity, 15%). The resulting stampable sheet was cut to a given size (200×200 mm), followed by the cut pieces being stacked together and heated in a furnace at 320°C for 10 minutes, thereby melting the polyphenylene sulfide resin. The nonwoven fabric was then immediately fed in the molten state to a mold loaded into a press molding machine and heated to 200°C, where it was molded under 100 MPa of pressure, then allowed to cool and solidify. This yielded a ribbed molding having a width of 25 cm, a thickness of 2 mm, and a length of 25 cm. The molding cycle was 30 seconds. A flat plate-like molding having a width of 25 cm, a thickness of 2 mm and a length of 25 cm was similarly molded.

These moldings had a hydrogen gas permeability of $8.0 \times 10^{-7}$ cm$^3$/sec·cm$^2$·atm, a volume resistivity of 110 mΩ·cm, and a flexural strength of 50 MPa.

Assembly of the fuel cell unit cells for the purpose of evaluating the power generating characteristics was attempted. However, when an electrolyte-membrane-electrode assembly was placed between two of the ribbed moldings and these two moldings were clamped together, cracking of the ribbed moldings occurred, making it impossible to assemble the fuel cell. Hence, the power generating characteristics could not be evaluated. The poor thickness precision of ribbed moldings produced by this method most likely led to an imbalance in the pressure applied during clamping of the ribbed moldings, thereby causing them to crack.

The results obtained in the above examples are presented in Tables 1 and 2.

Table 1

| | Example 1 | Example 2 | Example 3 |
|---|---|---|---|
| Graphite (%) | 80 | 70 | 80 |
| Carbon fibers | -- | -- | -- |
| Thermoplastic resin fibers | 20 (PPS) | 30 (PPS) | 20 (PP/PE) |
| Porosity (%) | 75 | 75 | 75 |
| Evaluation of Gas Sealability Gas permeability[1]) | $30 \times 10^{-5}$ | $1.5 \times 10^{-6}$ | $3.0 \times 10^{-5}$ |
| Volume resistivity in thickness direction[2]) | 5 | 15 | 7 |
| Flexural strength (MPa) | 50 | 56 | 40 |

1) Units for gas permeability are cm$^3$/sec·cm$^2$·atm.

2) Units for volume resistivity in thickness direction are mΩ·cm.

Table 1   (continued)

|  | Example 1 | Example 2 | Example 3 |
|---|---|---|---|
| Product thickness (mm) | 2 | 2 | 2 |
| Thickness variation (μm) | 9 | 7 | 10 |
| Evaluation of Graphite Particle Size<br>Particle size before molding (μm)<br>Particle size after molding (μm) | 88<br>80 | 88<br>78 | 88<br>78 |
| Power generated by unit cell (mV) | 783 | 720 | 780 |

Table 2

|  | Comparative Ex. 1 | Comparative Ex. 2 |
|---|---|---|
| Graphite (%) | -- | 80 |
| Carbon fibers | 80 | -- |
| Thermoplastic resin fibers | 20 | -- |
| Thermoplastic resin powder | -- | 20 |
| Porosity (%) | 60 | 15 |
| Evaluation of Gas Sealability Gas permeability[1] | $5.0 \times 10^{-3}$ | $8.0 \times 10^{-7}$ |
| Volume resistivity in thickness direction[2] | 60 110 | 110 |
| Flexural strength (MPa) | 80 | 50 |
| Product thickness (mm) Thickness <u>variation</u> μm) | 2 60 | 2 130 |
| Evaluation of Graphite Particle Size<br>Particle size before molding (μm)<br>Particle size after molding (μm) | --<br>-- | 88<br>11 |
| Power generated by unit cell (mV) | not measurable | not measurable |

1) Units for gas permeability are $cm^3/sec \cdot cm^2 \cdot atm$.

2) Units for volume resistivity in thickness direction are $m\Omega \cdot cm$.

INDUSTRIAL APPLICABILITY

The present invention can be employed to provide bipolar plates for various types of fuel cells, including phosphoric acid fuel cells, solid polymer fuel cells and direct methanol fuel cells, and also to provide fuel cells in which these bipolar plates are used.

**Claims**

1. A method for manufacturing a fuel cell bipolar plate, the method comprising heating and softening a nonwoven fabric including an electrically conductive powder and thermoplastic resin fibers of 0.1 to 20 μm diameter, and shaping the softened nonwoven fabric.

2. The method for manufacturing a fuel cell bipolar plate according to claim 1, wherein the nonwoven fabric has an content of the electrically conductive powder of 70 wt% or more.

3. The method for manufacturing a fuel cell bipolar plate according to claim 1, wherein the electrically conductive powder has an average particle size which is at least ten times the diameter of the thermoplastic resin fibers and not more than one-third the length of the thermoplastic resin fibers.

4. The method for manufacturing a fuel cell bipolar plate according to claim 1, wherein the nonwoven fabric has a porosity of 50% or more.

5. The method for manufacturing a fuel cell bipolar plate according to claim 1, wherein the thermoplastic resin fibers are polyarylene sulfide resin fibers.

6. The method for manufacturing a fuel cell bipolar plate according to claim 1, wherein the electrically conductive powder is uniformly distributed within the nonwoven fabric.

7. The method for manufacturing a fuel cell bipolar plate according to claim 1, wherein the nonwoven fabric is shaped using a mold.

8. A fuel cell bipolar plate obtained by heating and softening a nonwoven fabric including an electrically conductive powder and thermoplastic resin fibers of 0.1 to 20 $\mu$m diameter, and shaping the softened nonwoven fabric.

9. The fuel cell bipolar plate of claim 8, which has a volume resistivity in a thickness direction of 30 m$\Omega$·cm or less.

10. A fuel cell comprising a stack construction in which a plurality of electrolyte-membrane-electrode assemblies, each of which has a pair of mutually opposed electrodes and an electrolyte membrane disposed between the electrodes, are stacked so that the electrolyte-membrane-electrode assemblies are each held between bipolar plates, wherein the bipolar plates are the fuel cell bipolar plates of claim 8.

FIG. 1

# FIG. 2

FIG. 3

EP 1 577 971 A1

FIG. 4A

1

2

FIG. 4B

10

2

1

9

2

## INTERNATIONAL SEARCH REPORT

| | International application No. |
| --- | --- |
| | PCT/JP2004/006468 |

**A. CLASSIFICATION OF SUBJECT MATTER**
Int.Cl⁷ H01M8/02

According to International Patent Classification (IPC) or to both national classification and IPC

**B. FIELDS SEARCHED**

Minimum documentation searched (classification system followed by classification symbols)
Int.Cl⁷ H01M8/02

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
| --- | --- | --- |
| A | JP 8-1853 A (Showa Denko Kabushiki Kaisha), 09 January, 1996 (09.01.96), (Family: none) | 1-10 |
| A | JP 2000-133281 A (Dainippon Ink And Chemicals, Inc.), 12 May, 2000 (12.05.00), (Family: none) | 1-10 |
| A | JP 2001-15131 A (Dainippon Ink And Chemicals, Inc.), 19 January, 2001 (19.01.01), (Family: none) | 1-10 |

☒ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 August, 2004 (04.08.04) | 17 August, 2004 (17.08.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/006468 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-212434 A  (Yukadenshi Co., Ltd.),<br>31 July, 2002 (31.07.02),<br>(Family: none) | 1-10 |
| A | JP 2-281567 A  (Hitachi, Ltd.),<br>19 November, 1990 (19.11.90),<br>(Family: none) | 1-10 |
| A | JP 6-290796 A  (Shin-Etsu Polymer Co., Ltd.),<br>18 October, 1994 (18.10.94),<br>(Family: none) | 1-10 |
| P,A | Jianhua Huang and Donald G. Baird<br>'COMPRESSION MOLDING OF HIGHLY CONDUCTIVE<br>FUEL CELL BIPOLAR PLATES FROM A THERMOPLASTIC<br>COMPOSITE' In: ANTEC 2003, pages 2151 to 2155 | 1-10 |
| A | JP 8-508214 A  (E.I. Du Pont De Nemours & Co.),<br>03 September, 1996 (03.09.96),<br>& US 5614312 A | 1-10 |

Form PCT/ISA/210 (continuation of second sheet) (January 2004)